# EUROPEAN PATENT APPLICATION

(11) **EP 2 911 063 A1**
(43) Date of publication of application: **26.08.2015**
(21) Application number: 13846907.7
(22) Date of filing: 13.08.2013
(51) Int. Cl.: G06F 13/00

(54) **REMOTE STORAGE SYSTEM AND METHOD USING NETWORK ATTACHED STORAGE (NAS) DEVICE**

(30) Priority: 16.10.2012 CN 201210393665
(71) Applicant: ZTE Corporation, Shenzhen, Guangdong 518057 (CN)
(72) Inventor: RAN, Weiwei, Shenzhen Guangdong518057 (CN)
(74) Representative: Modiano, Micaela Nadia
(86) International application number: PCT/CN2013/081396
(87) International publication number: WO 2014/059817

(57) **Abstract**

A remote storage system and method using an NAS device is provided, which enable a terminal device to upload or download storage information on the NAS device through a network. The remote storage system using the NAS device comprises: an NAS device configured to store first information uploaded by a terminal device or store second information to be downloaded by the terminal device, the first information and the second information being called storage information; a first component connected between the terminal device and the NAS device, and configured to forward the storage information; and a second component connected to the first component and configured to store user information corresponding to the NAS device, and allocates, to the NAS device according to the user information, an account and a domain name address that are used for forwarding the storage information. The present invention uses a unified management forwarding platform to unify all network storage devices, making it convenient for each network terminal to upload or download data on the NAS device.

## Description

### Technical field

The present invention relates to the field of communications, and in particular to a remote storage system and method using a Network Attached Storage (NAS) device.

### Background

NAS is a mechanism using special devices directly connected to a network medium to realize data storage. These devices are all allocated with Internet protocol (IP) addresses, and have advantages as follows.

Firstly, the NAS is applicable to users that need to transmit file data to a plurality of clients through a network, and therefore, a NAS device may function well in an environment of long-distance transmission of the data.

Secondly, the NAS device is easy to deploy, so that an NAS host, clients and other devices may be widely distributed in a network environment of the whole enterprise, and the NAS device may provide reliable file-level data integration, because file locking is processed by the devices themselves.

Thirdly, the NAS is applied to an efficient file sharing task, such as a Network File system (NFS) in the UNIX and a Common Internet File System (CIFS) in the Windows NT, wherein the network-based file-level locking provides an advanced concurrent access protection function.

In addition, the NAS may satisfy the requirement of medium and small enterprises that hope to reduce storage costs but cannot afford the exorbitant price of a Storage Area Network (SAN), and has a very good cost-performance ratio.

The space required for the storage of homes or small enterprises is bigger and bigger, using a network disk space cannot completely satisfy the requirements of use, purchasing a network disk with a bigger space is more expensive than using an NAS, and the management thereof is not convenient than that of the NAS, such as the permission.

Therefore, the problems that the network disk space cannot satisfy the requirements of users and the cost of purchasing a bigger network disk is expensive is existed in the related art.

### SUMMARY

Provided is a remote storage system and method using an NAS device, so as to at least solve the problems that the network disk space cannot satisfy the requirements of users and the cost of purchasing a bigger network disk is expensive exist in the related art.

In order to solve the above-mentioned problem, according to one aspect of the present invention, a remote storage system using an NAS device is provided, and the following technical solution is used:
in the embodiments of the present invention, the remote storage system using the NAS device comprises: an NAS device configured to store first information uploaded by a terminal device or store second information to be downloaded by the terminal device, the first information and the second information being collectively referred to as storage information; a first component connected between the terminal device and the NAS device, and configured to forward the storage information; and a second component connected to the first component and configured to store user information corresponding to the NAS device, and allocating, to the NAS device, an account for forwarding the storage information according to the user information.

Preferably, the second component is further configured to allocate a domain name address for the NAS device, and the domain name address is used for a wide area network user to access the NAS device directly.

Preferably, the remote storage system using the NAS device further comprises: an NAS device management component configured to register the NAS device in the first component and manage the NAS device.

Preferably, the first component comprises: a third component configured to temporarily store the storage information.

Preferably, the remote storage system using the NAS device further comprises: a fourth component connected to the first component and configured to temporarily store the storage information.

Preferably, the remote storage system using the NAS device further comprises: a routing component connected between the NAS device and the first component, and configured to allocate a device port and an IP address of a local area network for the NAS device.

According to another aspect of the present invention, a remote storage method using an NAS is provided, and the following technical solution is used:
in the embodiments of the present invention, the remote storage method using the NAS comprises: acquiring a request sent by a terminal device; according to user information about the terminal device, acquiring an account and a domain name address of the NAS device corresponding to the terminal device; and according to the account and the domain name address, storing or downloading storage information corresponding to the request from the corresponding NAS device.

Preferably, after acquiring the request sent by the terminal device, the remote storage method using the NAS further comprises: sending a first notification message, which indicates that there is a file to be stored or downloaded, to an NAS device management component.

Preferably, according to the account and the domain name address, storing or downloading the storage information corresponding to the request from the corresponding NAS device comprises: receiving the first notification message through the NAS device management component; and according to the first notification message, acquiring the storage information and storing same in a temporary storage component.

Preferably, according to the first notification message, acquiring the storage information and storing same in the temporary storage component comprises: downloading the storage information from the NAS device or the terminal device in a manner of a File Transfer Protocol (FTP) or a Hypertext Transfer Protocol (HTTP).

Preferably, after storing or downloading, according to the account and the domain name address, the storage information corresponding to the request from a corresponding NAS device, the remote storage method using the NAS further comprises: acquiring a second notification message sent by the NAS device management component; and according to the second notification message, determining whether the storage information is successfully stored or downloaded, and in the case of being successfully stored or downloaded, deleting the storage information from the temporary storage component.

In the present invention, the NAS accessing a wide area network is uniformly managed through a forwarding station, and performs better data transmission with other network devices, thus implementing the unified management of the NAS of different manufacturers and more simple introduction use, and particularly facilitating that various different network terminals may conveniently perform remote network storage, thereby increasing the network storage capacity, reducing the input of purchasing a network space, and being very suitable for the requirement of homes and small enterprises for the real-time storage of personal data.

### Brief Description of the Drawings

Drawings, provided for further understanding of the present invention and forming a part of the present application, are used to explain the present invention together with embodiments of the present invention rather than to limit the present invention. In the drawings:
Fig. 1 is an architecture diagram of a remote storage system using an NAS device according to an embodiment of the present invention;
Fig. 2 is an architecture diagram of a remote storage system using an NAS device according to a preferred embodiment of the present invention; and
Fig. 3 is a flowchart of a remote storage method using an NAS device according to an embodiment of the present invention.

### Detailed Description of Embodiments

The embodiments of the present invention are described in detail hereinafter with reference to the accompany drawings, but the present invention can be implemented by a plurality of manners defined and covered in the claims.

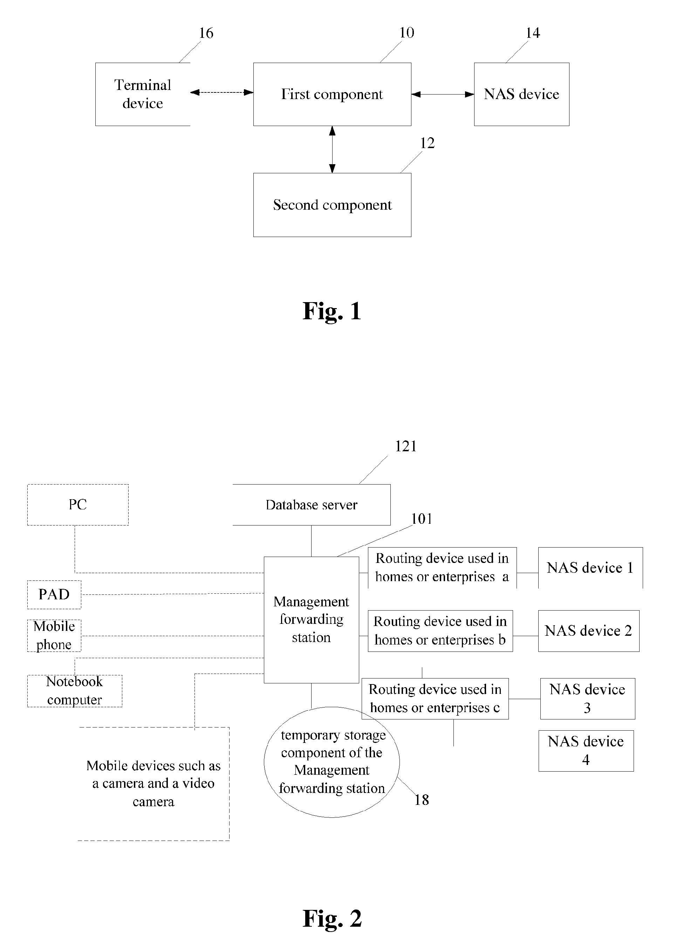

Fig. 1 is an architecture diagram of a remote storage system using an NAS device according to an embodiment of the present invention. As shown in Fig. 1, the remote storage system using the NAS device comprises: an NAS device 14 configured to store first information uploaded by a terminal device 16 or store second information to be downloaded by the terminal device 16, the first information and the second information being collectively referred to as storage information; a first component 10 connected between the terminal device 16 and the NAS device 14, and configured to forward the storage information; and a second component 12 connected to the first component 10, and configured to store user information corresponding to the NAS device 14, and allocating, to the NAS device 14, an account and a domain name address which are used for forwarding the storage information according to the user information.

In the above-mentioned technical solution of the embodiment, the NAS device 14 of a user is connected to the first component 10, wherein the first component 10 is a forwarding component and is configured to forward the storage information between the terminal device 16 and the NAS device 14, and further allocate the account and the domain name address for each NAS device 14 at the same time, wherein the account and the domain name address are allocated according to the user information corresponding to the NAS device 14 and stored in the second component 12, the account is used for accurately forwarding the above-mentioned storage information, and the domain name address is used for a wide area network user to directly access the NAS device 14.

When being specifically used, a user using the terminal device 16 sends request information to the first component 10 through the terminal device 16, and according to the request information and user information about the terminal device 16, the first component 10 firstly acquires storage information corresponding to the request information, and then accurately forwards the storage information according to the above-mentioned user information.

According to the above-mentioned technical solution of the embodiment, an NAS device accessing a wide area network is uniformly managed through a forwarding station, and performs better data transmission with other network devices, thus implementing the unified management of the NAS devices of different manufacturers, and particularly facilitating that various different network terminals may conveniently perform remote network storage, thereby increasing the network storage capacity, reducing the input of purchasing a network space, and being very suitable for the requirement of homes and small enterprises for the real-time storage of personal data.

Preferably, the remote storage system using the NAS device further comprises: an NAS device management component (not shown in the figure), configured to register the NAS device in the first component and manage the NAS device.

In the technical solution of the embodiment, it still can be seen from Fig. 1 that, when accessing the first component 10, the NAS device 14 registers in the first component 10 through an NAS device management component (not shown in the figure), and the NAS device management component (not shown in the figure) manages the NAS device 14, comprising receiving a message from the first component 10 (i.e. the forwarding station), and managing the NAS device 14 according to the message, but being not limited thereto.

In the embodiment, the NAS device management component (not shown in the figure) is responsible for communicating with the first component 10 so as to complete the management of the NAS device 14, comprising executing the uploading and downloading of the storage information, thereby facilitating the use of a remote storage system using the NAS device.

Preferably, the first component 10 comprises a third component (not shown in the figure) configured to temporarily store the storage information.

As a preferred implementation, the first component 10 comprises a temporary storage component i.e. a third component (not shown in the figure), configured to temporarily store the storage information required to be forwarded by the first component 10.

In the embodiment, the temporary storage component is integrated in the first component 10, without individually configuring a temporary storage component so that the system device is simple and is easy to store and manage.

Preferably, the remote storage system using the NAS device further comprises a fourth component (not shown in the figure) connected to the first component 10 and configured to temporarily store the storage information.

What is different from the foregoing embodiment is that, in this embodiment, the temporary storage component is separated from the first component 10 and is configured to temporarily store the storage information required to be forwarded by the first component 10, thereby having the feature of being easy to be maintained.

Fig. 2 is an architecture diagram of a remote storage system using an NAS device according to a preferred embodiment of the present invention. In the preferred embodiment, the detailed architecture of the remote storage system using the NAS device is provided, and in the early stage of the specific use, the following early-stage environment preparation is required to be made: that is, using a network storage device of each user as a storage end, i.e. an NAS device, and installing a management component i.e. an NAS device management component (not shown in the figure) configured to register a connection in a forwarding station. Each mobile or fixed data acquisition terminal, i.e. a terminal device provided with a client management component is connected to a forwarding management platform, so as to obtain the permission to access a network storage device.

As shown in Fig. 2, an NAS device 1, an NAS device 2, an NAS device 3 and an NAS device 4 of a user may all access a management forwarding station 101 (that is equivalent to the first component in the above-mentioned embodiment) through a routing device used in homes or enterprises, a routing device b used in homes or enterprises or a routing device c used in homes or enterprises, wherein the routing devices used in homes or enterprises are configured to connect a wide area network and allocate device ports and IP addresses for devices in a local area network; a database server 121 is connected to the management forwarding station 101 and is configured to store information about each NAS device and a user account, and allocates an account and a domain name address for each NAS device according to the information about the NAS device and the user account and allocates the account and domain name address to each NAS device through the management forwarding station 101; and a management forwarding station temporary storage component 18 is also connected to the management forwarding station 101 and is configured to store a file uploaded or downloaded by a user for being used as forwarding, and deletes temporary storage information in the management forwarding station temporary storage component 18 immediately after the file is successfully uploaded or downloaded.

When being used, mobile terminal devices, such as a PC, a PAD, a mobile phone, a notebook computer, a camera, a video camera and so on, of a user acquiring the use permission may all log in the management forwarding station 101 to send a request for uploading or downloading a file. According to the user permission, the management forwarding station 101 acquires storage information corresponding to the request and temporarily stores same in the management forwarding station temporary storage component 18, and then forwards the storage information.

Now the working process of a remote storage system using an NAS device is described by taking high definition camera monitoring in an internet cafe as an example.

After accessing a wide area network, the NAS device is verified and registered by a management forwarding station 101, and notifies the management forwarding station 101 that the NAS device is in a using state.

After the NAS device is resisted, the management forwarding station 101 allocates a domain name to the NAS device.

A high definition camera management system obtains the permission by accessing the management forwarding station 101.

The high definition camera management system uploads a file required to be stored on the NAS device to the management forwarding station 101.

After obtaining the file uploaded by the high definition camera management system, the management forwarding station 101 immediately sends a message to a management component corresponding to the NAS device, i.e. an NAS device management component, to notify that there is a file required to be stored.

After receiving the message indicating that there is a file required to be stored, a network storage device management component (not shown in the figure) obtains the file of the management forwarding station 101 in the manner of a ftp or a http, and stores the file in a network storage device, i.e. a management forwarding station temporary storage component 18.

After acquiring the file, the NAS device sends a message to notify the management forwarding station 101 that the file has been successfully stored. At this time, the management forwarding station 101 immediately deletes the file, and notifies a high definition camera management system component that the file has been successfully stored.

It can be seen from the above-mentioned technical solution of the embodiment that the remote storage system using the NAS device has the advantages as follows:
(1) NAS provides an efficient and low-cost resource application system. Since the NAS itself is a set of independent network servers and may be flexibly arranged on any network segment of a network, thereby improving the efficiency and security of resource information services, and having good expandability and low costs at the same time.
(2) Flexible personal disk space services are provided. The NAS may create a personal disk usage space for each user, so as to facilitate the finding and modification of data materials created by itself.
(3) An environment for data online backup is provided. The NAS may support an external magnetic tape unit, which may effectively transmit data to an external magnetic tape unit from a server, thereby guaranteeing data security and quick backup.
(4) Resource data is effectively protected. The NAS has an automatic log function, and thus can automatically record access information about all the users. An embedded operation management system may guarantee that a system never collapses, so as to ensure continuous resource services, and effectively protect the security of resource data.
(5) There is not a limitation of a region. For example, data about monitoring an internet cafe is not necessary to be stored in a local area network, such that the security of data is greatly increased, and the data is prevent from being destroyed.

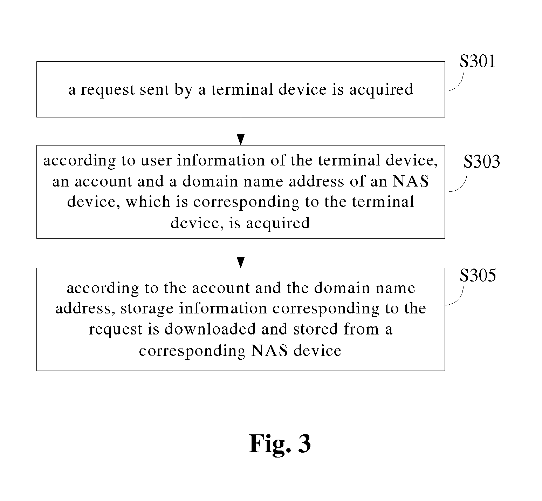

Fig. 3 is a flowchart of a remote storage method using an NAS device according to an embodiment of the present invention. As shown in Fig. 3, the remote storage method using NAS may comprise the following processing steps.

Step S301: a request sent by a terminal device is acquired.

Step S303: according to user information of the terminal device, an account and a domain name address of an NAS device, which is corresponding to the terminal device, is acquired.

Step S305: according to the account and the domain name address, storage information corresponding to the request is downloaded and stored from a corresponding NAS device.

Preferably, after acquiring the request sent by the terminal device, the remote storage method using the NAS further comprises: a first notification message indicating that there is a file to be stored or downloaded to an NAS device management component.

Preferably, according to the account and the domain name address, storing or downloading the storage information corresponding to the request from the corresponding NAS device comprises: a first notification message is received through the NAS device management component; and the storage information is acquired according to the first notification message, and is stored in a temporary storage component.

Preferably, according to the first notification message, acquiring the storage information and storing same in the temporary storage component comprises: the storage information is downloaded from the NAS device or the terminal device in the manner of an FTP or an HTTP.

Preferably, after storing or downloading, according to the account and the domain name address, the storage information corresponding to the request from the corresponding NAS device, the remote storage method using the NAS further comprises: a second notification message sent by the NAS device management component is acquired; and according to the second notification message, it is determined whether the storage information is successfully stored or downloaded, and based on that the storage information is successfully stored or downloaded, the storage information is deleted from the temporary storage component.

By means of the technical solution of the present invention, direct access of various systems and various terminals to a network attached storage, i.e. an NAS device, may be shielded, and the access permission is verified through a forwarding station, thereby improving the security of storage resources. In addition, it does not need to learn the configuration about a relatively complex dynamic IP corresponding to a fixed domain name, thereby reducing the introduction use of the network attached storage. At the same time, network NAS devices of all the manufactures are unified, and a lot of money is saved by using the NAS device instead of purchasing a large-capacity network disk space, so that homes or small enterprises may consume, and the storage and backup of large-capacity data (such as video monitoring and television recording) are convenient. Moreover, the network attached storage is used, and a complete PC does not need, thereby saving the home space and the electricity cost.

What mentioned above is a preferred implementation of the present invention, and it should be explained that various improvements or modifications can also be made by those skilled in the art within the principle of the disclosure and shall fall within the protection scope of the present invention.

## Claims

1. A remote storage system using a Network Attached Storage (NAS) device, **characterized by** comprising:
an NAS device configured to store first information uploaded by a terminal device or store second information to be downloaded by the terminal device, the first information and the second information being collectively referred to as storage information;
a first component connected between the terminal device and the NAS device, and configured to forward the storage information; and
a second component connected to the first component and configured to store user information corresponding to the NAS device, and allocating, to the NAS device, an account for forwarding the storage information according to the user information.

2. The remote storage system according to claim 1, **characterized in that** the second component is further configured to allocate a domain name address for the NAS device, and the domain name address is used for a wide area network user to access the NAS device directly.

3. The remote storage system according to claim 1, **characterized in that** the storage system further comprises:
an NAS device management component configured to register the NAS device in the first component and manage the NAS device.

4. The remote storage system according to claim 1, **characterized in that** the first component comprises:
a third component configured to temporarily store the storage information.

5. The remote storage system according to claim 1, **characterized in that** the storage system further comprises:
a fourth component connected to the first component and configured to temporarily store the storage information.

6. The remote storage system according to any one of claims 1 to 5, **characterized in that** the storage system further comprises:
a routing component connected between the NAS device and the first component, and configured to allocate a device port and an Internet Protocol (IP) address of a local area network for the NAS device.

7. A remote storage method using a Network Attached Storage (NAS), **characterized by** comprising:
acquiring a request sent by a terminal device;
acquiring an account and a domain name address of the NAS device corresponding to the terminal device according to user information about the terminal device; and
storing or downloading storage information corresponding to the request from the corresponding NAS device according to the account and the domain name address.

8. The method according to claim 7, **characterized in that** after acquiring the request sent by the terminal device, the remote storage method using the NAS further comprises:
sending a first notification message, which indicates that there is a file to be stored or downloaded, to an NAS device management component.

9. The method according to claim 8, **characterized in that** storing or downloading the storage information corresponding to the request from the corresponding NAS device according to the account and the domain name address comprises:
receiving the first notification message through the NAS device management component; and
according to the first notification message, acquiring the storage information and storing the storage information in a temporary storage component.

10. The remote storage method using the NAS according to claim 9, **characterized in that** according to the first notification message, acquiring the storage information and storing the storage information in a temporary storage component comprises:
downloading the storage information from the NAS device or the terminal device in a manner of a File Transfer Protocol (FTP) or a Hypertext Transfer Protocol (HTTP).

11. The remote storage method using the NAS according to claim 9, **characterized in that** after storing or downloading, according to the account and the domain name address, the storage information corresponding to the request from a corresponding NAS device, the remote storage method using the NAS further comprises:
acquiring a second notification message sent by the NAS device management component; and
determining whether the storage information is successfully stored or downloaded according to the second notification message, and based on that the storage information is successfully stored or downloaded, deleting the storage information from the temporary storage component.
